# EUROPÄISCHE PATENTSCHRIFT

(11) **EP 2 936 521 B1**
(45) Veröffentlichungstag und Bekanntmachung des Hinweises auf die Patenterteilung: **30.11.2016**
(21) Anmeldenummer: 13811904.5
(22) Anmeldetag: 18.12.2013
(51) Int. Cl.: H01F 38/14, H01M 2/10, H01M 10/46, H02J 7/02, H01M 10/617, H01M 10/6554, H01M 10/6235

(54) **HANDWERKZEUGAKKU**
HANDHELD TOOL BATTERY
ACCUMULATEUR D'OUTIL À MAIN

(30) Priorität: 21.12.2012 DE 102012112876; 17.12.2013 DE 102013226232
(43) Veröffentlichungstag der Anmeldung: 28.10.2015
(73) Patentinhaber: Robert Bosch GmbH, 70442 Stuttgart (DE)
(72) Erfinder: REJMAN, Marcin, 71332 Waiblingen (DE); LOHR, Guenter, 70771 Leinfelden-Echterdingen (DE); MACK, Juergen, 73035 Goeppingen (DE); KRUPEZEVIC, Dragan, 70565 Stuttgart (DE)
(86) Internationale Anmeldenummer: PCT/EP2013/077141
(87) Internationale Veröffentlichungsnummer: WO 2014/096035

(56) Entgegenhaltungen:
- EP-A1- 0 642 203
- WO-A2-2011/011681
- DE-A1-102006 042 602
- US-A1- 2001 045 785
- US-A1- 2007 029 965
- US-A1- 2010 164 431

## Beschreibung

### Stand der Technik

Es ist bereits ein Handwerkzeugakku mit mindestens einer Akkuzelle und einer Induktivladeeinheit, die zumindest einen Spulenkern und eine Induktivladespule zu einer Aufladung der mindestens einen Akkuzelle aufweist, vorgeschlagen worden.

Aus US 2001/0045785 A1 ist eine Empfangseinheit mit einer Empfangsspule bekannt, welche von einer Grundeinheit einen Induktionsfluss empfängt. Die Empfangsspule ist entweder in einem Gehäuse eines tragbaren Geräts oder in einem separaten Gehäuse, das mit einem tragbaren Gerät elektrisch verbunden ist, untergebracht.

### Offenbarung der Erfindung

Die Erfindung geht aus von einem Handwerkzeugakku mit einem Gehäuse, mindestens einer Akkuzelle und einer Induktivladeeinheit, die zumindest einen Spulenkern und eine Induktivladespule zu einer Aufladung der mindestens einen Akkuzelle aufweist.

Es wird vorgeschlagen, dass die Induktivladeeinheit in dem Gehäuse lösbar, insbesondere mechanisch lösbar, aufgenommen ist. Unter einem "Handwerkzeugakku" soll insbesondere eine Vorrichtung mit mindestens einer Akkuzelle und zumindest einer Elektronik zu einer Auf- und Entladung der Akkuzelle verstanden werden, wobei die Vorrichtung dazu vorgesehen ist, zumindest ein Handwerkzeug mit elektrischer Energie zu versorgen. Bevorzugt ist der Handwerkzeugakku dazu vorgesehen, mit dem Handwerkzeug durch einen Bediener insbesondere werkzeuglos lösbar zu koppeln. Alternativ könnte der Handwerkzeugakku in das Handwerkzeug integriert sein. Insbesondere soll unter einem "Handwerkzeug" in diesem Zusammenhang ein durch einen Benutzer handgeführtes Elektrogerät, wie insbesondere eine Bohrmaschine, ein Bohrhammer, eine Säge, ein Hobel, ein Schrauber, eine Fräse, ein Schleifer, ein

Winkelschleifer, ein Multifunktionswerkzeug, ein Baustellenmessgerät und/oder ein Gartengerät wie eine Hecken-, Strauch- und/oder Grasschere, verstanden werden. Vorzugsweise ist das Handwerkzeug als eine Handwerkzeugmaschine, also als ein werkstückbearbeitendes Handwerkzeug, ausgebildet. Insbesondere soll unter einem "Gehäuse" ein Bauteil oder eine Baugruppe verstanden werden, das oder die dazu vorgesehen ist, zumindest die Induktivladeeinheit und die Akkuzellen gegenüber der Umgebung vor einer mechanischen Beschädigung und/oder Verschmutzung zu schützen. Insbesondere bildet das Gehäuse ein mehrteiliges Gehäuse des Handwerkzeugakkus. Insbesondere definiert das Gehäuse eine Form und eine Größe des Handwerkzeugakkus. Vorzugsweise weist das Gehäuse eine Befestigungsvorrichtung zu einer Befestigung des Handwerkzeugakkus an dem Handwerkzeug auf. Vorteilhaft weist das Gehäuse Kontaktaussparungen auf, durch die ein elektrischer Kontakt zwischen dem Handwerkzeug und zumindest der Akkuzelle herstellbar ist. Unter einer "Akkuzelle" soll insbesondere ein Mittel verstanden werden, das zu einer elektrochemischen Speicherung elektrischer Energie mittels einer reversiblen Reaktion vorgesehen ist. Die Akkuzelle kann beispielsweise von einer Bleiakkuzelle, einer NiCd-Akkuzelle, einer NiMH-Akkuzelle, bevorzugt jedoch von einer lithiumbasierten Akkuzelle, gebildet sein. Die Akkuzellen können von Akkuzellen unterschiedlicher Nennspannungen gebildet sein, beispielsweise Nennspannungen von 1,2 V, 1,5 V oder vorteilhaft ca. 3,6 V. Bevorzugt weisen die Akkuzellen eine Zylinderform auf, wobei andere, dem Fachmann als sinnvoll erscheinende Formen möglich sind. Vorteilhaft weist der Handwerkzeugakku mehrere Akkuzellen auf, beispielsweise zumindest zwei, drei, vier, fünf oder zehn. Insbesondere sind die Akkuzellen parallel und/oder in Reihe geschaltet. Insbesondere soll unter einer "Induktivladeeinheit" eine Einheit zur Aufladung der Akkuzelle verstanden werden, die einen Ladestrom über Induktion empfängt und die zumindest die Induktivladespule und vorteilhaft eine Induktivladeelektronik umfasst. Bevorzugt umfasst die Induktivladeeinheit zudem zumindest einen Spulenkern zu einer Erhöhung einer Induktivität der zumindest einen Induktivladespule. Unter einem "Spulenkern" soll in diesem Zusammenhang insbesondere ein Mittel verstanden werden, das dazu vorgesehen ist, ein elektromagnetisches Feld zu bündeln. Insbesondere ist der Spulenkern zumindest im Wesentlichen von einem Magnetwerkstoff gebildet. Unter einem "Magnetwerkstoff" soll in diesem Zusammenhang insbesondere ein ferrimagnetischer, insbesondere weichmagnetischer, Werkstoff verstanden werden. Alternativ oder zusätzlich könnte der Spulenkern ferromagnetische und/oder antiferromagnetische Werkstoffe aufweisen. Vorteilhaft ist der Magnetwerkstoff von einem Ferritmaterial gebildet. Unter einem "Ferrit" soll in diesem Zusammenhang insbesondere ein Werkstoff verstanden werden, der zu mindestens 70 %, vorteilhaft zu mindestens 80 %, vorzugsweise zu mindestens 90 %, aus Eisenoxid (Fe₂O₃ und/oder Fe₃O₄) gebildet ist. Bevorzugt weist der Magnetwerkstoff eine Permeabilitätszahl µ größer als 100, bevorzugt größer als 1000, besonders bevorzugt größer als 5000, auf. Der Spulenkern ist vorteilhaft als zumindest ein Sinterbauteil ausgebildet. Vorzugsweise ist der Spulenkern mittels zumindest eines Sintervorgangs hergestellt, der dem Spulenkern seine bestimmungsgemäße Form gibt. Alternativ könnte der Spulenkern als ein Verbundbauteil ausgebildet sein, das von einem Matrixmaterial aus Magnetwerkstoff, beispielsweise Sinterbruchstücken, und Verbindungsmittel, beispielsweise einem Harz, gebildet ist. Vorteilhaft weist die Induktivladeeinheit einen Spulenträger auf, der die Induktivladespule relativ zu dem Spulenkern positioniert. Der Spulenträger weist zur Aufnahme der Induktivladespule eine Ausnehmung auf, die vorzugsweise als eine Nut ausgebildet ist. Die Induktivladespule ist insbesondere in der Ausnehmung auf den Spulenträger aufgewickelt. Der Spulenträger weist zur Aufnahme des Spulenkerns zumindest einen Aufnahmebereich auf. Der zumindest eine Aufnahmebereich ist insbesondere als eine Ausnehmung ausgebildet, in die der Spulenkern eingelegt ist. Vorteilhaft ist die Induktivladeeinheit dazu vorgesehen, zur Steuerung der Ladung und insbesondere zur Fremdobjekterkennung mit einem Induktivladegerät der Induktivladevorrichtung zu kommunizieren. Unter einer "Induktivladespule" soll in diesem Zusammenhang insbesondere eine Spule mit mindestens einer Wicklung aus einem elektrisch leitenden Material verstanden werden, die dazu vorgesehen ist, in zumindest einem Betriebszustand eine elektrische Energie, die bei einem Ladevorgang von einer Induktivladespule eines Induktivladegeräts gesendet wird, zu empfangen und über die Induktivladeelektronik einer Akkuzelle zuzuführen. Insbesondere ist die Induktivladespule dazu vorgesehen, ein elektromagnetisches Wechselfeld in einen elektrischen Wechselstrom umzuwandeln und/oder umgekehrt. Bevorzugt weist das Wechselfeld eine Frequenz von 10 - 500 kHz, besonders bevorzugt von 100 - 120 kHz, auf. Vorzugsweise ist die Induktivladespule als eine gewickelte Spule ausgebildet, alternativ könnte die Spule als eine auf einer Platine aufgebrachte Spule ausgebildet sein. Insbesondere soll unter einer "Aufladung" ein Vorgang verstanden werden, bei dem eine Energie induktiv von dem Induktivladegerät auf den Handwerkzeugakku übertragen wird. Unter "lösbar" soll insbesondere eine werkzeuglose und zerstörungsfreie mechanische Trennung der Induktivladeeinheit mit dem Gehäuse verstanden werden.

Es wird vorgeschlagen, dass die Induktivladespule auf einer Spulenebene der Induktivladespule und der Spulenkern auf zumindest einer Ebene parallel zu der Spulenebene unterschiedliche Grundformen aufweisen. Unter einer "Spulenebene" soll insbesondere eine Ebene verstanden werden, die durch einen Mittelpunkt der Induktivladespule verläuft und senkrecht zu einer Richtung einer Feldlinie an dem Mittelpunkt ausgerichtet ist. Vorzugsweise ist eine Haupterstreckungsebene der Induktivladespule parallel zu der Spulenebene ausgerichtet. Insbesondere soll unter einer "Ebene parallel zu der Spulenebene" eine Ebene verstanden werden, die parallel zu der Spulenebene ausgerichtet ist und die von der Spulenebene beabstandet sein kann. Vorzugsweise ist die Ebene von der Spulenebene beabstandet angeordnet. Unter einer "Grundform auf einer Ebene" soll insbesondere eine Form einer maximalen Erstreckung der Induktivladespule bzw. des Spulenkerns entlang einer Schnittfläche mit der Ebene verstanden werden. Insbesondere soll unter der Wendung "unterschiedliche Grundformen" verstanden werden, dass die Induktivladespule und der Spulenkern Formen aufweisen, die sich um mehr als 10 %, vorteilhaft mehr als 20 %, unterscheiden, wenn die Formen eine gleiche Flächengröße aufweisen. Durch die erfindungsgemäße Ausgestaltung des Handwerkzeugakkus kann eine vorteilhaft platzsparende Abschirmung zumindest der Akkuzellen erreicht werden.

In einer weiteren Ausgestaltung wird vorgeschlagen, dass die Induktivladespule auf der Spulenebene der Induktivladespule eine kreisförmige Grundform aufweist, wodurch eine optimale Ladung bei unterschiedlichen Ausrichtungen des Handwerkzeugakku relativ zu einer Induktivladeeinheit um eine Wicklungsachse der Induktivladespule erreicht werden kann. Unter einer "kreisförmigen Grundform" soll insbesondere eine Form auf der Ebene verstanden werden, deren Außenerstreckung zumindest im Wesentlichen kreisförmig ausgebildet ist. Unter "im Wesentlichen" soll insbesondere mit weniger als 10 % Abweichung, vorteilhaft mit weniger als 5 % Abweichung, verstanden werden.

Des Weiteren wird vorgeschlagen, dass der Spulenkern auf der Ebene parallel zu der Spulenebene eine rechteckförmige Grundform aufweist, wodurch eine optimale Baugröße und Bauform erreicht werden kann. Unter einer "rechteckförmige Grundform" soll insbesondere eine Form verstanden werden, deren Außenerstreckung zumindest im Wesentlichen rechteckförmig ausgebildet ist. Vorzugsweise weist der Spulenkern in der Ebene eine rechteckförmige Grundform mit abgerundeten Ecken auf. Vorzugsweise ist die Ebene parallel zu der Spulenebene wenigstens 1 mm, vorteilhaft wenigstens 2 mm, besonders vorteilhaft wenigstens 4 mm, von der Spulenebene beabstandet angeordnet. Alternativ könnte der Spulenkern auf der Ebene parallel zu der Spulenebene eine kreisförmige Grundform aufweisen. Insbesondere weist der Spulenkern in diesem Fall mehrere, vorzugsweise vier, insbesondere gleichförmige Teilstücke auf, die von Kreissektoren gebildet sind.

Ferner wird vorgeschlagen, dass der Spulenkern auf der Ebene eine größere Fläche aufspannt als die Induktivladespule auf der Spulenebene, wodurch eine vorteilhafte Abschirmung möglich ist. Insbesondere soll unter der Wendung "eine größere Fläche aufspannen" verstanden werden, dass der Schnitt der Induktivladespule auf der Spulenebene eine größere Fläche aufweist als der Schnitt des Spulenkerns auf der anderen Ebene. Vorzugweise weist der Spulenkern auf der Ebene eine zumindest 5 % größere Fläche, vorteilhaft eine zumindest 10 % größere Fläche auf als die Induktivladespule auf der Spulenebene.

Zudem wird vorgeschlagen, dass der Spulenkern mehrstückig ausgebildet ist, wodurch eine geringe mechanische Empfindlichkeit erreicht werden kann. Alternativ könnte der Spulenkern einstückig ausgebildet sein. Unter dem Begriff "mehrstückig" soll insbesondere verstanden werden, dass der Spulenkern zumindest zwei einstückige Teilstücke aufweist. Bevorzugt weisen die Teilstücke eine gleiche Form auf. Insbesondere sind die Teilstücke pizzastückförmig ausgebildet. Vorzugsweise sind die Teilstücke regelmäßig, besonders bevorzugt symmetrisch, angeordnet. Bei einem Spulenkern, der eine rechteckförmige Grundform aufweist, sind vorzugsweise vier im Wesentlichen gleichförmige Teilstücke vorgesehen. Die vier Teilstücke bilden zumindest im Wesentlichen Quadranten der rechteckförmigen Grundform. Dabei können die außenliegenden Ecken der Quadranten abgerundet sein.

Zur Aufnahme der Teilstücke des mehrstückigen Spulenkerns weist der Spulenträger vorteilhaft mehrere Aufnahmebereiche derart auf, dass für jedes Teilstück ein Aufnahmebereich vorgesehen ist. Durch die Aufnahme der Teilstücke in den Aufnahmebereichen sind die Teilstücke relativ zueinander an dem Spulenträger angeordnet. Die Aufnahmebereiche sind insbesondere von Ausnehmungen gebildet, in die die Teilstücke eingelegt sind. Die Ausnehmungen haben insbesondere eine der Form der Teilstücke im Wesentlichen komplementäre Form. Zwei zueinander benachbarte Ausnehmungen sind insbesondere durch eine Wand voneinander getrennt. Die Wand zwischen zwei Ausnehmungen dient als Abstandselement zur Beabstandung zwei zueinander benachbarter Teilstücke des Spulenkerns.

Weiterhin wird vorgeschlagen, dass die Induktivladeeinheit eine eigenständig testbare Baugruppe bildet, wodurch ein Test der Induktivladeeinheit zu einem frühen Produktionszeitpunkt möglich ist. Insbesondere soll unter einer "Baugruppe" eine Anzahl von Bauteilen verstanden werden, die dazu vorgesehen sind, miteinander verbunden eine stabile Einheit zu bilden. Insbesondere soll unter einer "eigenständig testbaren Baugruppe" in diesem Zusammenhang eine Baugruppe verstanden werden, deren Funktion insbesondere von den Akkuzellen und/oder von einer Handwerkzeugelektronik getrennt testbar ist. Insbesondere ist die Baugruppe vorteilhaft nur mit geometrischen Änderungen einzelner Bauelemente, beispielsweise eines Gehäuseteils, in verschiedenen Akkutypen einsetzbar.

In einer vorteilhaften Ausbildung der Erfindung wird vorgeschlagen, dass die Induktivladeeinheit mittels zumindest eines Verbindungsmittels zu der Baugruppe verbunden ist. Das Verbindungsmittel ist insbesondere ein Verbindungsmittel zur lösbaren mechanischen Verbindung der einzelnen Bauelemente zu der Baugruppe. Das Verbindungsmittel ist insbesondere ein unmagnetisches Verbindungsmittel, wodurch eine hohe Güte bei einer Energieübertragung des Ladevorgangs erreicht werden kann. Insbesondere soll unter einem "unmagnetischen Verbindungsmittel" ein Mittel verstanden werden, das dazu vorgesehen ist, die Bauteile der Induktivladeeinheit aneinander zu befestigen, und das eine magnetische Permeabilität kleiner als 10, vorteilhaft kleiner als 2, besonders vorteilhaft von im Wesentlichen 1, aufweist. Vorzugsweise ist das Verbindungsmittel aus einem nichtmetallischen Material gefertigt. Bevorzugt ist das Verbindungsmittel aus einem elektrisch isolierenden und einem unmagnetischen Material gebildet.

Des Weiteren wird vorgeschlagen, dass die Induktivladeeinheit eine Induktivladeelektronik aufweist, die dazu vorgesehen ist, die Akkuzelle zu laden, wodurch ein vorteilhafter Schutz der Akkuzellen konstruktiv einfach möglich ist Insbesondere soll unter einer "Induktivladeelektronik" eine Elektronik verstanden werden, die dazu vorgesehen ist, den Ladevorgang zumindest zu steuern. Vorzugsweise ist die Induktivladeelektronik dazu vorgesehen, zur Steuerung des Ladevorgangs und/oder zur Fremdobjekterkennung mit dem Induktivladegerät zu kommunizieren.

Ferner wird vorgeschlagen, dass die Induktivladeeinheit ein Gehäuseteil des Handwerkzeugakkus umfasst. Dadurch erhält die Induktivladeeinheit als eigenständig testbare Baugruppe einen mechanisch vergleichsweise robusten Aufbau.

In einer vorteilhaften Ausgestaltung ist das Verbindungsmittel zur mechanisch lösbaren Verbindung der Komponenten der Induktivladeeinheit zu einer Baugruppe an dem Gehäuseteil des Handwerkzeugakkus ausgebildet. Dadurch kann die Induktivladeeinheit konstruktiv einfach zu der Baugruppe verbunden werden. Unter einem "Gehäuseteil" soll insbesondere ein Mittel verstanden werden, das zumindest eine Außenseite des Handwerkzeugakkus aufweist. Vorteilhaft weist das Gehäuseteil eine Induktivladeseite auf. Insbesondere soll unter einer "Induktivladeseite" eine Außenseite des Gehäuses verstanden werden, durch die die Induktivladespule die magnetische Energie empfängt. Insbesondere ist die Induktivladeseite senkrecht zu einer Wicklungsachse der Induktivladespule ausgerichtet und am nächsten zu der Induktivladespule angeordnet. Unter dem Begriff "verrasten" soll insbesondere verstanden werden, dass das Gehäuseteil ein Formschlussmittel aufweist, das bei einem Zusammenfügen der Induktivladeeinheit mit der Induktivladeelektronik koppelt. Vorzugsweise weist das Gehäuse zumindest zwei Gehäuseteile auf. Die zwei Gehäuseteile können zum Beispiel als Gehäusehalbschalen ausgebildet sein. Besonders bevorzugt weist das Gehäuse mehr als zwei Gehäuseteile auf, beispielsweise vier Gehäuseteile, die vorteilhaft das Gehäuse jeweils auf unterschiedlichen Seiten begrenzen.

Zudem wird vorgeschlagen, dass der Handwerkzeugakku ein Wärmeausgleichsmittel aufweist, das dazu vorgesehen ist, Wärme gleichmäßig zu verteilen, wodurch eine gleichmäßige Erwärmung insbesondere der Akkuzellen erreicht werden kann. Dadurch kann eine Beschädigung einzelner Akkuzellen bei einer Schnellladung vermieden werden. Insbesondere soll unter einem "Wärmeausgleichsmittel" ein Mittel verstanden werden, das dazu vorgesehen ist, die Wärme von einem Punkt zu einem anderen Punkt zu leiten. Bevorzugt weist das Wärmeausgleichsmittel eine Wärmeleitfähigkeit λ größer als 50 W/(m K), vorteilhaft größer als 100 W/(m K), besonders vorteilhaft größer als 200 W/(m K) auf. Vorzugsweise umfasst das Wärmeausgleichsmittel zumindest ein, dem Fachmann als sinnvoll erscheinendes wärmeleitendes Metall, vorteilhaft jedoch Kupfer, Silber und/oder besonders vorteilhaft Aluminium. Alternativ könnte das Wärmeausgleichsmittel ein anderes, dem Fachmann als sinnvoll erscheinendes Wärmeausgleichselement umfassen, beispielsweise zumindest eine Heatpipe. Vorzugsweise ist das Wärmeausgleichsmittel ein Bauelement der Induktivladeeinheit. Vorzugsweise weist das Wärmeausgleichsmittel eine Wärmeleitquerschnittsfläche größer als 10 mm², besonders bevorzugt größer als 20 mm², auf. Unter der Wendung "Wärme gleichmäßig verteilen" soll insbesondere verstanden werden, dass das Wärmeausgleichsmittel an einer Stelle, insbesondere bei einem Ladevorgang an der Induktivladeelektronik, entstehende Wärme auf einen größeren Bereich, insbesondere an vorteilhaft alle Akkuzellen, weiterleitet.

Die Induktivladeeinheit weist einen Spulenträger mit einer Nut zur Aufnahme der Induktivladespule auf. Der Spulenträger weist zumindest einen Aufnahmebereich zur Aufnahme des Spulenkerns auf.

Der erfindungsgemäße Handwerkzeugakku soll hierbei nicht auf die oben beschriebene Anwendung und Ausführungsform beschränkt sein. Insbesondere kann der erfindungsgemäße Handwerkzeugakku zu einer Erfüllung einer hierin beschriebenen Funktionsweise eine von einer hierin genannten Anzahl von einzelnen Elementen, Bauteilen und Einheiten abweichende Anzahl aufweisen.

### Zeichnung

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der
Fachmann wird die Merkmale zweckmäßigerweise auch einzeln betrachten und zu sinnvollen weiteren Kombinationen zusammenfassen.

Es zeigen:
- Fig. 1: einen erfindungsgemäßen Handwerkzeugakku in einer perspektivischen Ansicht,
- Fig. 2: eine Frontalansicht des Handwerkzeugakkus aus Figur 1,
- Fig. 3: eine Induktivladeseite des Handwerkzeugakkus aus Figur 1,
- Fig. 4: einen ersten Schnitt des Handwerkzeugakkus aus Figur 1,
- Fig. 5: einen zweiten Schnitt des Handwerkzeugakkus aus Figur 1,
- Fig. 6: einen dritten Schnitt des Handwerkzeugakkus aus Figur 1 parallel zu dem zweiten Schnitt des Handwerkzeugakkus durch einen Spulenkern des Handwerkzeugakkus,
- Fig. 7: eine Induktivladeeinheit und ein Wärmeausgleichsmittel des Handwerkzeugakkus aus Figur 1 in einer Explosionsdarstellung,
- Fig. 8: die Induktivladeeinheit und Akkuzellen des Handwerkzeugakkus aus Figur 1 in einer Draufsicht von einer Oberseite,
- Fig. 9: einen Spulenträger und eine Induktivladespule des Handwerkzeugakkus aus Figur 1 in einer Draufsicht von der Induktivladeseite und,
- Fig. 10: einen Spulenkern und die Induktivladespule des Handwerkzeugakkus aus Figur 1 in einer Draufsicht von einer Oberseite und
- Fig. 11: den Spulenkern und die Induktivladespule aus Figur 8 in einer seitlichen Schnittdarstellung.

### Beschreibung des Ausführungsbeispiels

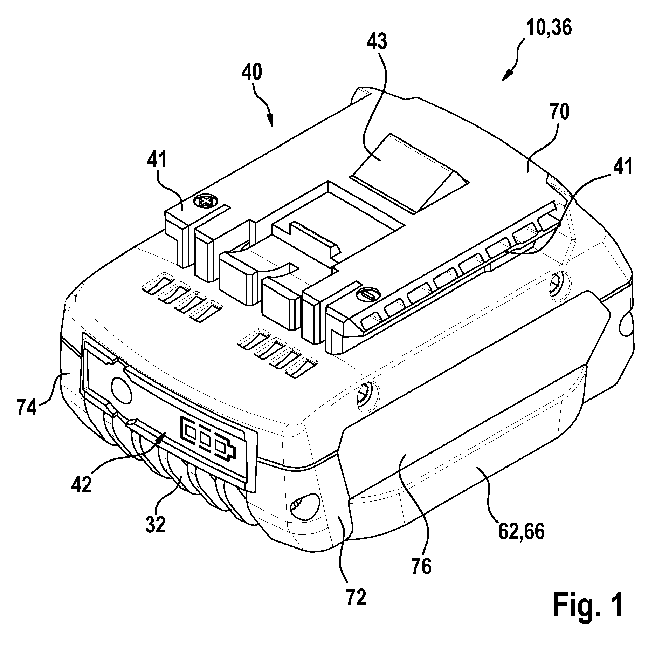

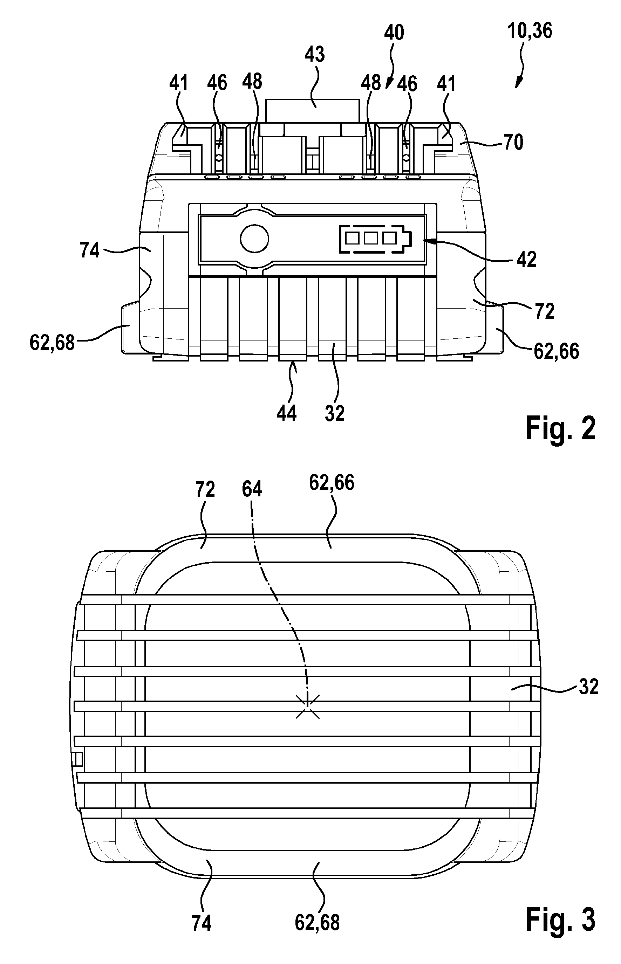

Die Figuren 1 bis 6 zeigen einen erfindungsgemäßen Handwerkzeugakku 10 mit mehreren Akkuzellen 12, einer Induktivladeeinheit 14, einem Wärmeausgleichsmittel 34, einem Gehäuse 36, einer Handwerkzeugelektronik 38, einer Handwerkzeugschnittstelle 40 und einer Ladezustandsanzeige 42. Bei einem Betrieb eines nicht näher dargestellten Handwerkzeugs stellt der Handwerkzeugakku 10 eine Betriebsenergie des Handwerkzeugs bereit. Die Akkuzellen 12 sind dazu vorgesehen, die Betriebsenergie zwischen einem Ladevorgang und einer Abgabe der Betriebsenergie zu speichern. Der Handwerkzeugakku 10 weist fünf Akkuzellen 12 auf. Die Akkuzellen 12 sind in Reihe geschaltet. Somit beträgt eine Nennspannung des Handwerkzeugakkus 10 18 Volt bei einer Akkuzellenspannung von 3,6 Volt.

Die Ladezustandsanzeige 42 ist dazu vorgesehen, einen Ladezustand der Akkuzellen 12 einem Bediener anzuzeigen. Die Handwerkzeugschnittstelle 40 ist dazu vorgesehen, den Handwerkzeugakku 10 mit dem Handwerkzeug mechanisch und elektrisch zu kontaktieren. Die Handwerkzeugschnittstelle 40 ist auf einer Seite angeordnet, die einer Induktivladeseite 44 des Gehäuses 36 abgewandt angeordnet ist, und zwar ist die Seite der Induktivladeseite 44 gegenüberliegend angeordnet. Die Handwerkzeugschnittstelle 40 umfasst Kontakte 46 zur Energieübertragung und Kontakte 48 zur Kommunikation mit dem Handwerkzeug. Die Handwerkzeugelektronik 38 ist dazu vorgesehen, eine Entladung und ggf. eine Ladung der Akkuzellen 12 über die Handwerkzeugschnittstelle 40 zu steuern. Die Handwerkzeugschnittstelle 40 umfasst Führungsschienen 41 und einen Riegel 43 zur mechanischen Kopplung mit dem Handwerkzeug.

Das Gehäuse 36 definiert eine äußere Form des Handwerkzeugakkus 10. Das Gehäuse 36 ist dazu vorgesehen, zumindest die Akkuzellen 12 und die Handwerkzeugelektronik 38 vor äußeren Einwirkungen zu schützen. Das Gehäuse 36 verbindet zumindest die Induktivladeeinheit 14, die Akkuzellen 12 und die Handwerkzeugschnittstelle 40 miteinander.

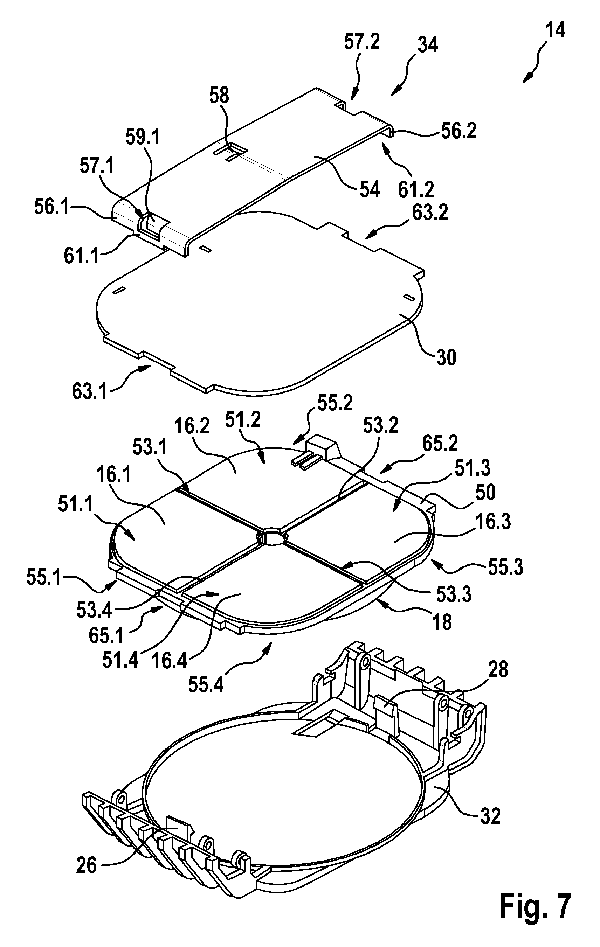

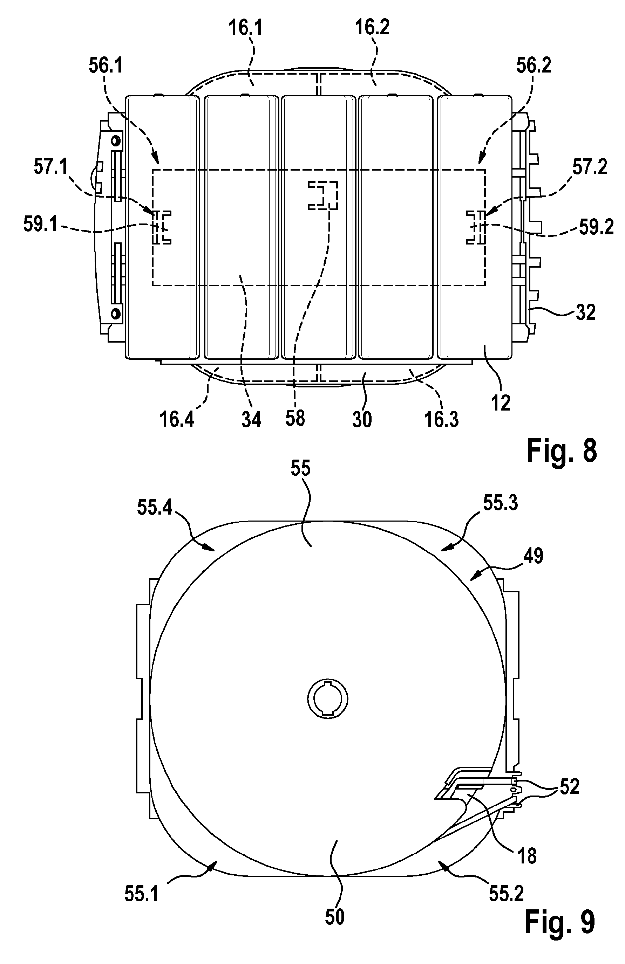

Die Figuren 7 und 8 zeigen die Induktivladeeinheit 14. Die Induktivladeeinheit 14 weist einen Spulenkern 16, eine Induktivladespule 18, eine Induktivladeelektronik 30, ein Gehäuseteil 32, das Wärmeausgleichsmittel 34 und einen Spulenträger 50 auf. Der in Figur 9 näher dargestellte Spulenträger 50 ist dazu vorgesehen, den Spulenkern 16 und die Induktivladespule 18 relativ zueinander anzuordnen. Der Spulenträger 50 weist eine Nut 49 auf, in der die Induktivladespule 18 aufgewickelt ist. Die Nut 49 weist einen kreisförmigen Verlauf auf. Die Nut 49 ist auf einer Außenseite zur Aufnahme der Induktivladespule 18 offen ausgebildet.

Der Spulenträger 50 begrenzt mehrere Aufnahmebereiche 51.1, 51.2, 51.3, 51.4, in denen jeweils eines von mehreren Teilstücken 16.1, 16.2, 16.3, 16.4 des Spulenkerns 16 aufgenommen ist. Der Spulenträger 50 weist Wandelemente 53.1, 53.2, 53.3, 53.4 zur Begrenzung der Aufnahmebereiche 51.1, 51.2, 51.3, 51.4 auf. Durch die Wandelemente 53.1, 53.2, 53.3, 53.4 sind die Teilstücke 16.1, 16.2, 16.3, 16.4 des Spulenkerns 16 beabstandet voneinander. Die Aufnahmebereiche 51.1, 51.2, 51.3, 51.4 sind ferner durch jeweils ein Bodenelement 55.1, 55.2, 55.3, 55.4 begrenzt. Die Bodenelemente 55.1, 55.2, 55.3, 55.4 bilden einen einstückigen Boden 55. Durch den Boden 55 sind die Teilstücke 16.1, 16.2, 16.3, 16.4 von der Induktivladespule 18 beabstandet angeordnet. Zudem ist der Spulenträger 50 dazu vorgesehen, Kontakte 52 an Enden der Wicklung der Induktivladespule 18 voneinander zu beabstanden, wodurch eine hohe Betriebssicherheit erreicht wird, weil ein Kurzschluss zwischen den Kontakten 52 der Induktivladespule 18, insbesondere durch eine Berührung der Kontakte 52, vermieden wird.

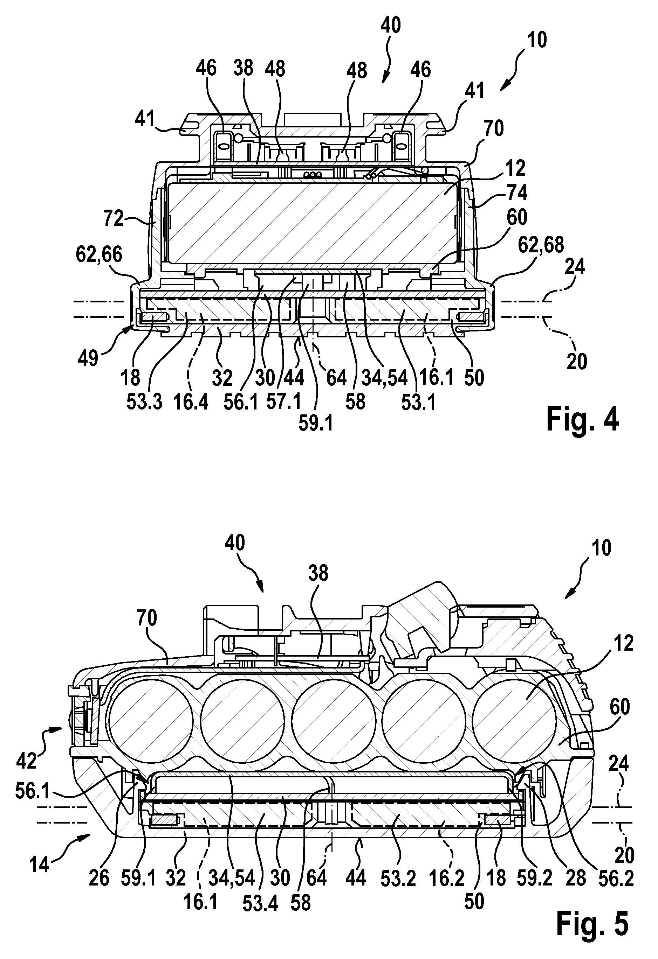

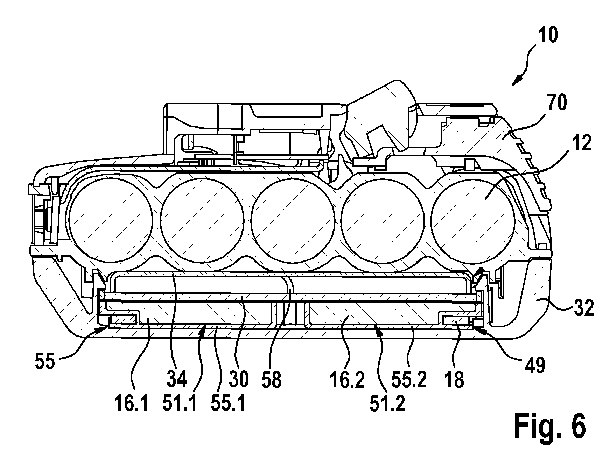

Die Schnitte der Figuren 4 und 5 verlaufen jeweils durch zwei der Wandelemente 53.1, 53.2, 53.3, 53.4. Die durch die Wandelemente 53.1, 53.2, 53.3, 53.4 verdeckt angeordneten Teilstücke 16.1, 16.2, 16.3, 16.4 sind in den Figuren 4 und 5 gestrichelt dargestellt. Der Schnitt der Figuren 6 verläuft parallel zu dem Schnitt aus Figur 5, jedoch außermittig und statt durch zwei der Wandelemente 53.2, 53.4 durch zwei der Teilstücke 16.1, 16.2.

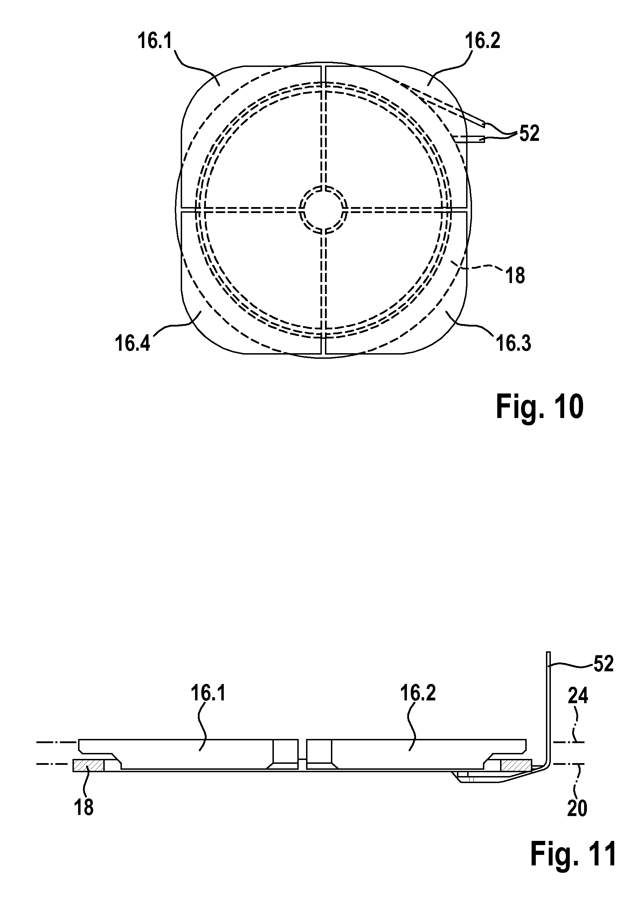

Die Figuren 9 und 10 zeigen lediglich den Spulenkern 16 und die Induktivladespule 18. Die Induktivladespule 18 ist auf dem in den Figuren 9 und 10 nicht dargestellten Spulenträger 50 von der Außenseite her aufgewickelt. Die Induktivladespule 18 empfängt bei einem Ladevorgang eine magnetische Energie einer Induktivladespule eines nicht näher dargestellten Induktivladegeräts durch die Induktivladeseite 44 des Gehäuses 36. Die Induktivladespule 18 des Handwerkzeugakkus 10 weist auf einer Spulenebene 20 der Induktivladespule 18 eine kreisförmige Grundform auf. Die Induktivladespule 18 weist einen Durchmesser von 77 mm auf. Die Induktivladespule 18 umschließt den Spulenkern 16 auf der Spulenebene 20.

Der Spulenkern 16 ist aus einem ferromagnetischen Material, und zwar aus einem Ferrit. Der Spulenkern 16 weist mehrere Teilstücke 16.1, 16.2, 16.3, 16.4, hier vier Teilstücke, auf. Alternativ könnte der Spulenkern 16 eine andere, dem Fachmann als sinnvoll erscheinende Anzahl von Teilstücken, beispielsweise zwei, drei, fünf, sechs oder mehr Teilstücke, aufweisen, oder einstückig ausgebildet sein. Die Teilstücke des Spulenkerns 16 sind pizzastückförmig ausgebildet und angeordnet.

Der Spulenkern 16 weist auf einer Ebene 24, die parallel zu der Spulenebene 20 ausgerichtet ist und die zwischen der Spulenebene 20 und der Induktivladeelektronik 30 angeordnet ist, eine rechteckförmige Grundform mit abgerundeten Ecken auf. Somit weisen die Induktivladespule 18 auf der Spulenebene 20 der Induktivladespule 18 und der Spulenkern 16 auf der Ebene 24 parallel zu der Spulenebene 20 unterschiedliche Grundformen auf. Zwei parallele Außenseiten des Spulenkerns 16 weisen einen Abstand auf der Ebene 24 von 74,6 mm auf. Die abgerundeten Ecken des Spulenkerns 16 weisen einen Radius von 19,4 mm auf.

Der Spulenkern 16 verbreitert sich von der Spulenebene 20 aus gesehen in Richtung der Akkuzellen 12. Der Spulenkern 16 weist auf der Ebene 24 zwischen der Spulenebene 20 und der Induktivladeelektronik 30 eine größte Erstreckungsfläche auf. Diese Erstreckungsfläche weist eine größere Fläche auf als eine Erstreckungsfläche der Induktivladespule 18 auf der Spulenebene 20. In der Spulenebene 20 weist der Spulenkern 16 einen Durchmesser von im Wesentlichen 61 mm auf. Die angegebenen Maße des Spulenkerns 16 und der Induktivladespule 18 sind beispielhafte Maße, die der Fachmann an den jeweiligen Einsatzbereich, insbesondere von einer Akkugröße abhängig, anpasst.

Das Gehäuseteil 32 des Gehäuses 36, das die Induktivladeseite 44 aufweist, ist ein Bauelement der Induktivladeeinheit 14. Das Gehäuseteil 32 weist Verbindungsmittel 26, 28 auf, die dazu vorgesehen sind, die Bauelemente der Induktivladeeinheit 14 zu einer mechanisch stabilen und eigenständig testbaren Baugruppe zu verbinden. Alternativ könnte ein anderes, dem Fachmann als sinnvoll erscheinendes Teil der Induktivladeeinheit 14 Verbindungsmittel aufweisen.

Die Verbindungsmittel 26, 28 sind einstückig mit dem Gehäuseteil 32 ausgebildet und somit aus einem unmagnetischen Material, nämlich einem, dem Fachmann als sinnvoll erscheinenden Kunststoff. Die Verbindungsmittel 26, 28 sind als Rasthaken ausgebildet. Die Verbindungsmittel 26, 28 dienen der mechanisch lösbaren Verbindung der Bauelemente der Induktivladeeinheit 14 miteinander. Die Verbindungsmittel 26, 28 des Gehäuseteils 32 sind in einem montierten Betriebszustand mit dem Wärmeausgleichsmittel 34 verrastet. Das Wärmeausgleichsmittel 34 befestigt wiederum die Induktivladeelektronik 30. Alternativ oder zusätzlich könnten die Verbindungsmittel 26, 28 mit der Induktivladeelektronik 30 verrasten. Die Verbindungsmittel 26, 28 sind auf gegenüberliegenden Seiten der Induktivladeelektronik 30 angeordnet. Die Verbindungsmittel 26, 28 befestigen die Induktivladeelektronik 30 über das Wärmeausgleichsmittel 34 zumindest formschlüssig.

Die Induktivladeelektronik 30 ist dazu vorgesehen, die Akkuzelle 12 mit einer von der Induktivladespule 18 empfangenen Energie zu laden. Die Kontakte 52 der Induktivladespule 18 sind auf einer der Induktivladeseite 44 abgewandten Seite mit der Induktivladeelektronik 30 verbunden, und zwar hier verlötet. Dazu weist die Induktivladeelektronik 30 eine nicht näher dargestellte Bestückung auf einer den Akkuzellen 12 zugewandten Seite auf. Eine Leiterplatte der Induktivladeelektronik 30 ist zweilagig ausgebildet. Auf einer den Akkuzellen 12 abgewandten Seite weist die Induktivladeelektronik 30 eine nicht näher dargestellte Kupferbeschichtung auf. Die Kupferbeschichtung weist mehrere, dem Fachmann als sinnvoll erscheinende Teilflächen mit unterschiedlichen Potenzialen auf. Bauteile der Bestückung, die sich bei einem Betrieb stark erwärmen, sind zur Kühlung thermisch mit der Kupferbeschichtung verbunden. Die Kupferbeschichtung weist zur Isolation auf einer dem Spulenkern 16 zugewandten Seite eine Lackbeschichtung auf. Die Kupferbeschichtung weist parallel zu der Ebene 24 eine kleinere Erstreckungsfläche auf als der Spulenkern 16 auf der Ebene 24, wodurch eine vorteilhaft hohe Güte erreicht werden kann. Insbesondere liegt eine Projektion der Kupferbeschichtung senkrecht zu der Ebene 24, zumindest im Wesentlichen vollständig innerhalb einer Projektion des Spulenkerns 16 senkrecht zu der Ebene 24.

Das Wärmeausgleichsmittel 34 ist zwischen der Induktivladeelektronik 30 und den Akkuzellen 12 angeordnet. Das Wärmeausgleichsmittel 34 ist dazu vorgesehen, Wärme der Induktivladeelektronik 30 gleichmäßig an die Akkuzellen 12 zu verteilen. Das Wärmeausgleichsmittel 34 weist eine Wärmeleitschicht 54 und Befestigungsmittel 56, 58 auf. Die Wärmeleitschicht 54 erstreckt sich zumindest im Wesentlichen parallel zu einer Haupterstreckung der Induktivladeelektronik 30. Die Wärmeleitschicht 54 weist eine maximale Projektionsfläche auf, die wenigstens 50 % einer maximalen Projektionsfläche der Induktivladeelektronik 30 beträgt. Die Wärmeleitschicht 54 ist als eine Aluminiumschicht ausgebildet. Die Wärmeleitschicht 54 weist eine Schichtdicke von 1 mm auf. Die Wärmeleitschicht 54 weist parallel zu der Haupterstreckung der Induktivladeelektronik 30 eine Länge auf, die im Wesentlichen einer Länge der Induktivladeelektronik 30 entspricht, und zwar in diesem Fall 77,5 mm. Die Wärmeleitschicht 54 ist von der Leiterplatte der Induktivladeelektronik 30 beabstandet angeordnet, und zwar hier zumindest 3,6 mm.

Das Wärmeausgleichsmittel 34 wird aus einem ausgeschnittenen und/oder ausgestanzten Aluminiumblech hergestellt. Durch einen Biegevorgang und/oder einen Prägevorgang werden die drei Befestigungsmittel 56.1 56.2, 58 geformt. Zwei erste der Befestigungsmittel 56.1, 56.2 sind an gegenüberliegenden Enden der Wärmeleitschicht 54 angeordnet. Die zwei ersten der Befestigungsmittel 56.1, 56.2 weisen jeweils eine Rastaussparung 57 auf. Die Verbindungsmittel 26, 28 greifen in einem montierten Zustand in die Rastaussparungen 57. Die Rastaussparungen 57 werden durch ein Einbiegen von Laschen 59.1, 59.2 gebildet. Die Laschen 59.1, 59.2 drücken in einem montierten Betriebszustand auf die Induktivladeelektronik 30. Die Befestigungsmittel 56.1, 56.2 weisen jeweils ein Formschlussmittel 61.1 61.2 auf. Die Formschlussmittel 61.1 61.2 greifen jeweils in Formschlussaussparungen 63.1 63.2 der Induktivladeelektronik 30. Die Formschlussmittel 61.1 61.2 befestigen die Induktivladeelektronik 30 in Richtungen parallel zu einer Haupterstreckungsebene der Induktivladeelektronik 30.

Ein zweites der Befestigungsmittel 58 ist mittig an der Wärmeleitschicht 54 angeordnet. Das zweite Befestigungsmittel 58 ist als eine eingebogene Lasche ausgebildet und drückt in einem montierten Betriebszustand etwa mittig auf die Induktivladeelektronik 30. Die Befestigungsmittel 56, 58 sind dazu vorgesehen, die Wärmeleitschicht 54 von der Induktivladeelektronik 30 zu beabstanden.

Die Induktivladeelektronik 30 hält die Teilstücke 16.1, 16.2, 16.3, 16.4 des Spulenkerns 16 in den Aufnahmebereichen 51.1, 51.2, 51.3, 51.4. Dazu verschließt die Induktivladeelektronik 30 die Aufnahmebereiche 51.1, 51.2, 51.3, 51.4 auf einer den Bodenelementen 55.1, 55.2, 55.3, 55.4 des Spulenträgers 50 abgewandten Seite. Der Spulenträger 50 ist formschlüssig drehfest mit dem Gehäuseteil 32 der Induktivladeeinheit 14 verbunden. Der Spulenträger 50 weist dazu Befestigungsaussparungen 65.1 65.2 auf, in die die Verbindungsmittel 26, 28 greifen.

Das Wärmeausgleichsmittel 34 ist in einem betriebsbereiten Zustand zusätzlich zwischen der Induktivladeelektronik 30 und einem Zellenhalter 60 des Handwerkzeugakkus 10 eingeklemmt. Das Wärmeausgleichsmittel 34 liegt stellenweise flächig an dem Zellenhalter 60 des Handwerkzeugakkus 10 an. Bei der Montage wird die Wärmeleitschicht 54 des Wärmeausgleichsmittels 34 gebogen. Der Handwerkzeugakku 10 weist an einer Außenseite keine metallischen Kühlmittel auf.

Der Handwerkzeugakku 10 weist zumindest zwei nicht näher dargestellte Thermosensoren auf. Mittels eines der Thermosensoren misst die Induktivladeelektronik 30 eine Temperatur der Akkuzellen 12. Mittels eines der Thermosensoren misst die Handwerkzeugelektronik 38 eine Temperatur der Akkuzellen 12. Die Thermosensoren sind zwischen den Akkuzellen 12 angeordnet. Alternativ oder zusätzlich könnten die Induktivladeelektronik 30 und die Handwerkzeugelektronik 38 einen oder mehrere gemeinsame Thermosensoren zur Messung der Temperatur der Akkuzellen 12 verwenden.

Das Gehäuse 36 weist ein Befestigungsmittel 62 zur Befestigung an dem Induktivladegerät in einer Richtung parallel zu einer Wicklungsachse 64 der Induktivladespule 18 auf. Das Befestigungsmittel 62 weist einen ersten Befestigungsbereich 66 und einen zweiten Befestigungsbereich 68 auf, die an gegenüberliegenden Seiten der Induktivladeseite 44 des Gehäuses 36 angeordnet sind. Die Befestigungsbereiche 66, 68 sind flügelförmig ausgebildet. Die Befestigungsbereiche 66, 68 sind als Aufnahmeschultern ausgebildet. Die Befestigungsbereiche 66, 68 weisen jeweils eine schienenförmige Form auf. Die Induktivladespule 18 ist teilweise innerhalb der Befestigungsbereiche 66, 68 angeordnet.

Wie insbesondere Figur 4 zeigt, weist das Gehäuse 36 vier Gehäuseteile 32, 70, 72, 74 auf. Ein erstes der vier Gehäuseteile 32 begrenzt das Gehäuse 36 der Induktivladeseite 44. Ein zweites der vier Gehäuseteile 70 begrenzt das Gehäuse 36 hauptsächlich auf einer der Induktivladeseite 44 gegenüberliegenden Seite. Das zweite Gehäuseteil 70 bildet Bereiche der Handwerkzeugschnittstelle 40. Hier bildet das zweite Gehäuseteil 70 die Führungsschienen 41 und den Riegel 43. Ein drittes und viertes der vier Gehäuseteile 72, 74 begrenzen den Handwerkzeugakku 10 an zwei Lateralseiten 76, an denen die Befestigungsmittel 62 angeordnet sind. Das dritte und das vierte Gehäuseteil 72, 74 sind jeweils mit dem Zellenhalter 60 verschraubt. Das zweite Gehäuseteil 70 ist ebenfalls mit dem Zellenhalter 60 verschraubt. Das erste Gehäuseteil 32 ist formschlüssig zwischen dem dritten und dem vierten Gehäuseteil 72, 74 befestigt.

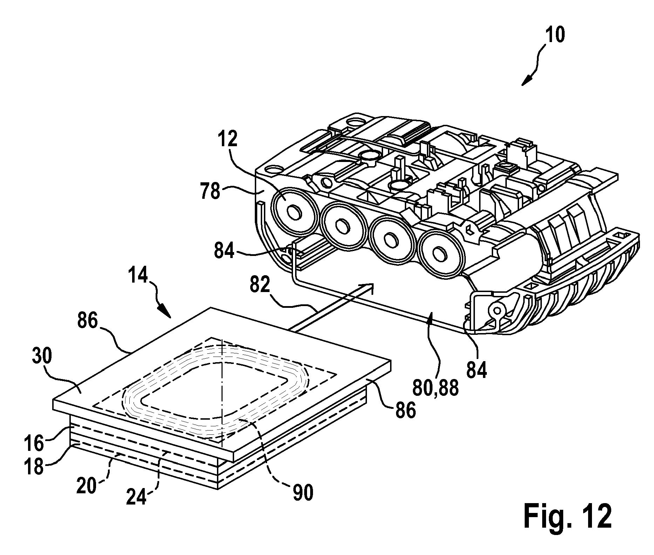

Figur 12 zeigt einen Teil eines weiteren alternativen Ausführungsbeispiels eines Handwerkzeugakkus 10 mit Akkuzellen 12, mit einer Induktivladeeinheit 14 und mit einem Gehäuseteil 78. Weitere Gehäuseteile eines Gehäuses sind nicht dargestellt. Die Induktivladeeinheit 14 weist einen Spulenkern 16, eine Induktivladespule 18 und eine Induktivladeelektronik 30 auf. Ähnlich wie das Gehäuseteil 32 aus den Figuren 1 und 7, weist das Gehäuseteil 78 die Induktivladeseite auf und bildet ein Bauelement der Induktivladeeinheit 14. Das Gehäuseteil 78 weist Verbindungsmittel 84 auf, die dazu vorgesehen sind, die Bauelemente der Induktivladeeinheit 14 zu einer mechanisch stabilen und eigenständig testbaren Baugruppe zu verbinden.

Die Verbindungsmittel 84 sind einstückig mit dem Gehäuseteil 78 ausgebildet und somit aus einem unmagnetischen Material, nämlich einem, dem Fachmann als sinnvoll erscheinenden Kunststoff. Die Verbindungsmittel 84 sind als Führungsschienen ausgebildet. Die Verbindungsmittel 84 dienen der mechanisch lösbaren Verbindung der Bauelemente der Induktivladeeinheit 14 miteinander.

Das Gehäuseteil 78 bildet einen taschenartigen Aufnahmebereich 80. Das Gehäuseteil 78 ist dazu vorgesehen, die Induktivladeeinheit 14 in den taschenartigen Aufnahmebereich 80 aufzunehmen. Das Gehäuseteil 78 weist in dem Aufnahmebereich 80 zwei parallel zu der Einschubrichtung 82 angeordnete Führungsschienen 84 auf. Die Induktivladeeinheit 14 in einer Einschubrichtung 82 in den taschenartigen Aufnahmebereich 80 eingeschoben wird. Die Einschubrichtung 82 ist senkrecht zu einer Wicklungsachse 64 der Induktivladespule 18 ausgerichtet. In die Führungsschienen 84 sind in einem montierten Zustand zwei Kanten 86 der Induktivladeelektronik 30 eingeschoben.

Der Spulenkern 16 wird von mit einem Bindemittel verbundenen Kernelementen gebildet. Die Kernelemente sind als Sinterbruchstücke ausgebildet. Alternativ oder zusätzlich könnte der Spulenkern mehrere insbesondere miteinander verklebte Sinterformstücke aufweisen. Der Spulenkern 16 weist auf einer Ebene 24 eine rechteckige Form auf. Alternativ kann der Spulenkern auch aus mehreren nebeneinander angeordneten Teilstücken - wie im Zusammenhang mit Figur 7 und 8 beschrieben - gebildet sein.

Die Induktivladespule 18 wird von einer Leiterplatte gebildet, die Leiterbahnen 90 aufweist. Die Leiterbahnen 90 sind mit einem nicht näher dargestellten Verbindungsleiter verbunden, so dass die Leiterbahnen 90 elektrisch eine einzelne Spule bilden. Die Induktivladespule 18 weist auf einer Spulenebene 20 eine rechteckförmige Grundform mit abgerundeten Ecken auf. Alternativ könnte die Induktivladespule 18 auf der Spulenebene 20 eine kreisförmige Grundform aufweisen. Somit weisen die Induktivladespule 18 auf der Spulenebene 20 der Induktivladespule 18 und der Spulenkern 16 auf zumindest einer Ebene 24 parallel zu der Spulenebene 20 unterschiedliche Grundformen auf. Alternativ kann die Induktivladespule jedoch auch aus einer mehrere Wicklungen aufweisende Spule - wie im Zusammenhang mit Figur 7 und 8 beschrieben - gebildet sein. Ferner kann die Induktivladespule 18 alternativ auch eine im Wesentlichen kreisförmige Grundform aufweisen.

Die Induktivladespule 18, der Spulenkern 16 und die Induktivladeelektronik 30 sind miteinander zu einer eigenständig testbaren Baugruppe verbunden. Hier sind die Induktivladespule 18, der Spulenkern 16 und die Induktivladeelektronik 30 verklebt, könnten alternativ aber auch auf eine andere, dem Fachmann als sinnvoll erscheinende Art verbunden sein. Die Induktivladespule 18 und die Induktivladeelektronik 30 sind elektrisch mittels eines nicht näher dargestellten, durch den Spulenkern 16 geführten Verbindungsleiters verbunden.

## Patentansprüche

1. Handwerkzeugakku mit einem Gehäuse (36), mindestens einer Akkuzelle (12) und einer Induktivladeeinheit (14), die zumindest einen Spulenkern (16) und eine Induktivladespule (18) zu einer Aufladung der mindestens einen Akkuzelle (12) aufweist, **dadurch gekennzeichnet, dass** die Induktivladeeinheit (14) lösbar in dem Gehäuse (36) aufgenommen ist.

2. Handwerkzeugakku nach Anspruch 1, **dadurch gekennzeichnet, dass** die Induktivladespule (18) auf einer Spulenebene (20) der Induktivladespule (18) und der Spulenkern (16) auf zumindest einer Ebene (24) parallel zu der Spulenebene (20) unterschiedliche Grundformen aufweisen.

3. Handwerkzeugakku nach Anspruch 1 oder 2, **dadurch gekennzeichnet, dass** die Induktivladespule (18) auf der Spulenebene (20) der Induktivladespule (18) eine kreisförmige Grundform aufweist.

4. Handwerkzeugakku nach einem der vorhergehenden Ansprüche, **dadurch gekennzeichnet, dass** der Spulenkern (16) auf der Ebene (24) parallel zu der Spulenebene (20) eine rechteckförmige Grundform aufweist.

5. Handwerkzeugakku nach einem der vorhergehenden Ansprüche, **dadurch gekennzeichnet, dass** der Spulenkern (16) auf der Ebene (24) eine größere Fläche aufspannt als die Induktivladespule (18) auf der Spulenebene (20).

6. Handwerkzeugakku nach einem der vorhergehenden Ansprüche, **dadurch gekennzeichnet, dass** der Spulenkern (16) mehrstückig ausgebildet ist.

7. Handwerkzeugakku nach einem der vorhergehenden Ansprüche, **dadurch gekennzeichnet, dass** die Induktivladeeinheit (14) eine eigenständig testbare Baugruppe bildet.

8. Handwerkzeugakku nach Anspruch 7, **dadurch gekennzeichnet, dass** die Induktivladeeinheit (14) mittels zumindest eines Verbindungsmittels (26, 28; 84) zu der Baugruppe verbunden ist.

9. Handwerkzeugakku nach einem der vorhergehenden Ansprüche, **dadurch gekennzeichnet, dass** die Induktivladeeinheit (14) eine Induktivladeelektronik (30) aufweist, die dazu vorgesehen ist, die Akkuzelle (12) zu laden.

10. Handwerkzeugakku nach einem der Ansprüche 7 bis 9, **dadurch gekennzeichnet, dass** die Induktivladeeinheit (14) ein Gehäuseteil (32; 78) des Handwerkzeugakkus (10) umfasst.

11. Handwerkzeugakku nach Anspruch 10, **dadurch gekennzeichnet, dass** das Verbindungsmittel (26, 28; 84) an dem Gehäuseteil (32; 78) ausgebildet ist.

12. Handwerkzeugakku nach Anspruch 11, **dadurch gekennzeichnet, dass** das Verbindungsmittel (26, 28; 84) einstückig mit dem Gehäuseteil (32; 78) ausgebildet ist.

13. Handwerkzeugakku nach Anspruch 11 oder 12, **dadurch gekennzeichnet, dass** das Verbindungsmittel (26, 28) als Rasthaken ausgebildet ist.

14. Handwerkzeugakku nach Anspruch 11 oder 12, **dadurch gekennzeichnet, dass** das Verbindungsmittel (84) als Führungsschiene ausgebildet ist.

15. Handwerkzeugakku nach einem der vorhergehenden Ansprüche, **gekennzeichnet durch** ein Wärmeausgleichsmittel (34), das dazu vorgesehen ist, Wärme gleichmäßig zu verteilen.

16. Handwerkzeugakku nach Anspruch 15, **dadurch gekennzeichnet, dass** das Wärmeausgleichsmittel (34) ein Bauelement der Induktivladeeinheit bildet.

17. Handwerkzeugakku nach einem der vorhergehenden Ansprüche, **dadurch gekennzeichnet, dass** die Induktivladeeinheit (14) einen Spulenträger (50) aufweist, der die Induktivladespule (18) relativ zu dem Spulenkern (16) positioniert.

18. Handwerkzeugakku nach Anspruch 17, **dadurch gekennzeichnet, dass** der Spulenträger (50) zur Aufnahme der Induktivladespule eine Ausnehmung (49) aufweist.

19. Handwerkzeugakku nach Anspruch 17 oder 18, **dadurch gekennzeichnet, dass** der Spulenträger (50) zumindest einen Aufnahmebereich (51) zur Aufnahme des Spulenkerns (16) aufweist.

## Claims

1. Handheld tool rechargeable battery comprising a housing (36), at least one rechargeable battery cell (12) and one inductive charging unit (14) which has at least one coil core (16) and one inductive charging coil (18) for charging the at least one rechargeable battery cell (12), **characterized in that** the inductive charging unit (14) is held in a detachable manner in the housing (36).

2. Handheld tool rechargeable battery according to Claim 1, **characterized in that** the inductive charging coil (18) on a coil plane (20) of the inductive charging coil (18) and the coil core (16) on at least one plane (24) parallel to the coil plane (20) have different basic shapes.

3. Handheld tool rechargeable battery according to Claim 1 or 2, **characterized in that** the inductive charging coil (18) on the coil plane (20) of the inductive charging coil (18) has a circular basic shape.

4. Handheld tool rechargeable battery according to one of the preceding claims, **characterized in that** the coil core (16) on the plane (24) parallel to the coil plane (20) has a rectangular basic shape.

5. Handheld tool rechargeable battery according to one of the preceding claims, **characterized in that** the coil- core (16) on the plane (24) spans a larger area than the inductive charging coil (18) on the coil plane (20).

6. Handheld tool rechargeable battery according to one of the preceding claims, **characterized in that** the coil core (16) is of multipartite design.

7. Handheld tool rechargeable battery according to one of the preceding claims, **characterized in that** the inductive charging unit (14) forms an assembly which can be independently tested.

8. Handheld tool rechargeable battery according to Claim 7, **characterized in that** the inductive charging unit (14) is connected to form the assembly by means of at least one connecting means (26, 28; 84).

9. Handheld tool rechargeable battery according to one of the preceding claims, **characterized in that** the inductive charging unit (14) has an inductive charging electronics system (30) which is provided for charging the rechargeable battery cell (12).

10. Handheld tool rechargeable battery according to one of Claims 7 to 9, **characterized in that** the inductive charging unit (14) comprises a housing part (32; 78) of the handheld tool rechargeable battery (10).

11. Handheld tool rechargeable battery according to Claim 10, **characterized in that** the connecting means (26, 28; 84) is formed on the housing part (32; 78).

12. Handheld tool rechargeable battery according to Claim 11, **characterized in that** the connecting means (26, 28; 84) is integrally formed with the housing part (32; 78).

13. Handheld tool rechargeable battery according to Claim 11 or 12, **characterized in that** the connecting means (26, 28) is in the form of a latching hook.

14. Handheld tool rechargeable battery according to Claim 11 or 12, **characterized in that** the connecting means (84) is in the form of a guide rail.

15. Handheld tool rechargeable battery according to one of the preceding claims, **characterized by** a thermal compensation means (34) which is provided for uniformly distributing heat.

16. Handheld tool rechargeable battery according to Claim 15, **characterized in that** the thermal compensation means (34) forms a component of the inductive charging unit.

17. Handheld tool rechargeable battery according to one of the preceding claims, **characterized in that** the inductive charging unit (14) has a coil former (50) which positions the inductive charging coil (18) relative to the coil core (16).

18. Handheld tool rechargeable battery according to Claim 17, **characterized in that** the coil former (50) has a recess (49) for holding the inductive charging coil.

19. Handheld tool rechargeable battery according to Claim 17 or 18, **characterized in that** the coil former (50) has at least one holding region (51) for holding the coil core (16).

## Revendications

1. Accumulateur pour outil électroportatif, comprenant un boîtier (36), au moins une cellule d'accumulateur (12) et une unité de charge inductive (14), laquelle possède au moins un noyau de bobine (16) et une bobine de charge inductive (18) pour une charge de l'au moins une cellule d'accumulateur (12), **caractérisé en ce que** l'unité de charge inductive (14) est logée de manière amovible dans le boîtier (36).

2. Accumulateur pour outil électroportatif selon la revendication 1, **caractérisé en ce que** la bobine de charge inductive (18), sur un plan de bobine (20) de la bobine de charge inductive (18), et le noyau de bobine (16), sur au moins un plan (24) parallèle au plan de bobine (20), présentent des formes de base différentes.

3. Accumulateur pour outil électroportatif selon la revendication 1 ou 2, **caractérisé en ce que** la bobine de charge inductive (18) présente- une forme de base circulaire sur le plan de bobine (20) de la bobine de charge inductive (18).

4. Accumulateur pour outil électroportatif selon l'une des revendications précédentes, **caractérisé en ce que** le noyau de bobine (16) présente une forme de base parallélépipédique sur le plan (24) parallèle au plan de bobine (20).

5. Accumulateur pour outil électroportatif selon l'une des revendications précédentes, **caractérisé en ce que** le noyau de bobine (16), sur le plan (24), couvre une surface plus grande que la bobine de charge inductive (18) sur le plan de bobine (20).

6. Accumulateur pour outil électroportatif selon l'une des revendications précédentes, **caractérisé en ce que** le noyau de bobine (16) est configuré en plusieurs parties.

7. Accumulateur pour outil électroportatif selon l'une des revendications précédentes, **caractérisé en ce que** l'unité de charge inductive (14) forme un sous-ensemble qui peut être testé de manière autonome.

8. Accumulateur pour outil électroportatif selon la revendication 7, **caractérisé en ce que** l'unité de charge inductive (14) est reliée au sous-ensemble par l'intermédiaire d'au moins un moyen de liaison (26, 28 ; 84).

9. Accumulateur pour outil électroportatif selon l'une des revendications précédentes, **caractérisé en ce que** l'unité de charge inductive (14) possède une électronique de charge inductive (30) qui est prévue pour charger la cellule d'accumulateur (12).

10. Accumulateur pour outil électroportatif selon l'une des revendications 7 à 9, **caractérisé en ce que** l'unité de charge inductive (14) englobe une partie de boîtier (32 ; 78) de l'accumulateur pour outil électroportatif (10).

11. Accumulateur pour outil électroportatif selon la revendication 10, **caractérisé en ce que** le moyen de liaison (26, 28 ; 84) est formé sur la partie de boîtier (32 ; 78).

12. Accumulateur pour outil électroportatif selon la revendication 11, **caractérisé en ce que** le moyen de liaison (26, 28 ; 84) est configuré d'une seule pièce avec la partie de boîtier (32 ; 78).

13. Accumulateur pour outil électroportatif selon la revendication 11 ou 12, **caractérisé en ce que** le moyen de liaison (26, 28) est configuré sous la forme d'un crochet d'encliquetage.

14. Accumulateur pour outil électroportatif selon la revendication 11 ou 12, **caractérisé en ce que** le moyen de liaison (84) est configuré sous la forme d'un rail de guidage.

15. Accumulateur pour outil électroportatif selon l'une des revendications précédentes, **caractérisé par** un moyen d'équilibrage thermique (34) qui est conçu pour distribuer la chaleur de manière homogène.

16. Accumulateur pour outil électroportatif selon la revendication 15, **caractérisé en ce que** le moyen d'équilibrage thermique (34) forme un composant de l'unité de charge inductive.

17. Accumulateur pour outil électroportatif selon l'une des revendications précédentes, **caractérisé en ce que** l'unité de charge inductive (14) possède un porte-bobine (50) qui positionne la bobine de charge inductive (18) par rapport au noyau de bobine (16).

18. Accumulateur pour outil électroportatif selon la revendication 17, **caractérisé en ce que** le porte-bobine (50) possède une cavité (49) destinée à accueillir la bobine de charge inductive.

19. Accumulateur pour outil électroportatif selon la revendication 17 ou 18, **caractérisé en ce que** le porte-bobine (50) possède au moins une zone d'accueil (51) destinée à accueillir le noyau de bobine (16).
